(19) Europäisches Patentamt
European Patent Office
Office européen des brevets

(11) EP 4 678 671 A1

(12) EUROPEAN PATENT APPLICATION

(43) Date of publication:
**14.01.2026 Bulletin 2026/03**

(21) Application number: **24187476.7**

(22) Date of filing: **09.07.2024**

(51) International Patent Classification (IPC):
***C08G 18/10*** *(2006.01)* ***C08G 18/12*** *(2006.01)*
***C08G 18/24*** *(2006.01)* ***C08G 18/28*** *(2006.01)*
***C08G 18/48*** *(2006.01)* ***C08G 18/75*** *(2006.01)*
***C09D 175/08*** *(2006.01)* ***C09J 175/08*** *(2006.01)*

(52) Cooperative Patent Classification (CPC):
(C-Sets available)
**C08G 18/12; C08G 18/10; C08G 18/246; C08G 18/283; C08G 18/289; C08G 18/4825; C08G 18/758; C09D 175/08; C09J 175/08** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Saint-Gobain Weber France**
**94370 Sucy en Brie (FR)**
- **Ecole Supérieure de Physique et de Chimie Industrielles de la Ville de Paris**
**75005 Paris (FR)**
- **Centre National de la Recherche Scientifique**
**75016 Paris (FR)**

(72) Inventors:
- **MELLO SANTOS, Gabriel**
**Paris (FR)**
- **CICCOTTI, Matteo**
**Paris (FR)**
- **TRAN-AMARELIS, Yvette**
**Paris (FR)**
- **CRETON, Constantino**
**Paris (FR)**
- **FOURTON, Paul**
**Aubervilliers (FR)**

(74) Representative: **Saint-Gobain Recherche**
**41 Quai Lucien Lefranc**
**93300 Aubervilliers (FR)**

# (54) SILANE-TERMINATED POLYMER AND ITS USE AS SEALANT AND ADHESIVE

(57) The present invention relates to a process for producing a polymer mixture, said process comprising:
a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M1; and
b) contacting said mixture M1 with a silane comprising at least one NCO-reactive group.

It also relates to a polymer mixture produced by such process, to a composition comprising such polymer mixture. It also relates to a sealant or adhesive formed from such composition.

EP 4 678 671 A1

(52) Cooperative Patent Classification (CPC): (Cont.)

C-Sets
**C08G 18/10, C08G 18/283;**
**C08G 18/12, C08G 18/289**

## Description

The present invention relates to a process for producing a silane-terminated polymer mixture. It also relates to a polymer mixture produced by such process, to a composition comprising such polymer mixture, and to a sealant or adhesive formed from such composition.

Curable compositions based on organic polymers containing reactive silane groups play an important role in many industrial applications. Such polymers are also referred to as "silane-functional polymers", "silane-modified polymers" (SMP) or "silane-terminated polymers" (STP), and are considered as hybrid polymers. Compositions containing these polymers are cured via crosslinking reactions of the reactive silane groups on the polymers, which hydrolyze under the influence of moisture, condense with one another as silanol groups and thus form siloxane bonds. Most commonly, these reactive silane groups are alkoxysilane or acyloxysilane groups. Depending on the content of silyl groups and their structure, various types of polymers can be obtained, such as long-chain polymers (thermoplastics), relatively coarse-meshed three-dimensional networks (elastomers) or highly crosslinked systems (thermosets). Silane-terminated polymers can in particular be obtained by reacting isocyanate group-containing polymers with a silane comprising an amino or any other isocyanate-reactive group. Usually, the amount of such silane is such that the isocyanate groups are completely reacted with the isocyanate-reactive groups of the silanes and no free isocyanate groups remain. The isocyanate group-containing polymers can be obtained by reacting diisocyanates with high molecular weight polyols, in particular diols. The molecular weight of the isocyanate group-containing polymer can be controlled by adjusting the molar ratio of the NCO groups of the diisocyanate to the hydroxyl groups of the high molecular weight polyol.

For instance, EP 2 952 533 discloses the production of silane-terminated polymers by reacting polyoxypropylene diol with isophorone diisocyanate at an NCO:OH ratio of 2.1:1 and subsequently reacting the resulting product with a diethyl N-(3-trialcoxysilylpropyl)aminosuccinate.

Due to their capacity for moisture-dependent crosslinking, silane-terminated polymers are particularly suitable for a use as moisture-curing adhesives or sealants. As they are free of isocyanate groups, they can - unlike isocyanate prepolymers - be combined with formulation components bearing isocyanate-reactive groups, such polyol-based plasticizers and aminosilane-based adhesion promoters.

The inventors have now discovered that the adhesion properties of silane-terminated polymers could be improved by reacting a part of the isocyanate groups of the isocyanate group-containing polymers with a compound comprising exactly one isocyanate-reactive group, before adding the silane. Such mono-functional compound allows to control the crosslink density of the final material, and can play the role of pending chains in the crosslink network.

SUMMARY

Thus, the present invention relates to a process for producing a polymer mixture, said process comprising:

a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M 1; and
b) contacting said mixture M1 with a silane comprising at least one NCO-reactive group.

In some embodiments, polymer P1 has a number-average molecular weight of:

- at least 1000 g/mol, preferably at least 2000 g/mol; and
- at most 60 000 g/mol, preferably at most 30 000 g/mol.

In some embodiments, polymer P1 is a polymer chosen from a polyacrylate, a polycarbonate, a polyester, a polyurethane, a polysiloxane, a polyether, a polyisoprene, a polybutadiene, copolymers thereof and mixtures thereof, where said polymer further comprises NCO groups such that its average NCO-functionality is of at least two.

In some embodiments, polymer P1 has an average NCO-functionality from two to four.

In some embodiments, compound C1 has a molecular weight from 50 to 25000 g/mol, preferably from 50 to 15000 g/mol, more preferably from 50 to 4000 g/mol, even more preferably 90 to 2000 g/mol. In some embodiments, said NCO-reactive group of compound C1 is a hydroxy group, a mercapto group, a primary amino group, a secondary amino group, a carboxy, or an amido, preferably a hydroxy group.

In some embodiments, said molar ratio of NCO-reactive groups of C1 to NCO groups of P1 is from 0.05 to 0.8, preferably from 0.07 to 0.7, more preferably from 0.1 to 0.5, even more preferably from 0.15 to 0.4.

In some embodiments, said silane comprising at least one NCO-reactive group is of formula (I):

$$R^1\text{-}Si(OR^2)_x(R^3)_{3-x} \qquad (I),$$

in which:

- x is 2 or 3,
- $R^1$ is a C1-C20 hydrocarbon group comprising at least one NCO-reactive group, said hydrocarbon group being optionally substituted by at least one (e.g. one or two) group of formula $-Si(OR^2)_x(R^3)_{3-x}$ (x, $R^2$, $R^3$ having the same meaning as defined for formula (I)),
- $R^2$ is a C1-C20 aliphatic group, a C3-C20 alicyclic group, a C6-C20 aromatic group, a C2-C20 acyl group, or a C2-C20 iminyl group, and
- $R^3$ is a C1-C20 aliphatic group, a C3-C20 alicyclic group, a C6-C20 aromatic group.

In some embodiments, said NCO-reactive group of the silane is a hydroxy group, a mercapto group, a primary amino group, a secondary amino group, a carboxy, or an amido, preferably a primary or secondary amino group.
In some embodiments, polymer P1 is produced by:
o) reacting a polymer P0 comprising NCO-reactive groups with an average NCO-reactive-functionality of at least two with a diisocyanate.
In some embodiments, polymer P0 has an average NCO-reactive-functionality from two to four.
In some embodiments, polymer P0 has a number-average molecular weight of:

- at least 1000 g/mol, preferably at least 2000 g/mol; and
- at most 60 000 g/mol, preferably at most 30 000 g/mol.

In some embodiments, polymer P0 is chosen from hydroxyl-terminated polyethers, hydroxyl-terminated polycarbonates, amine-terminated polyethers, amine-terminated polyesters, hydroxyl-terminated polyesters, hydroxyl-terminated polyisoprene, hydroxyl-terminated polybutadiene, copolymers thereof and mixtures thereof.
In some embodiments, said diisocyanate is chosen from 1,4-diisocyanatobutane, 1,5-diisocyanatopentane, hexamethylene 1,6-diisocyanate, 2-methyl-1,5-diisocyanatopentane, 1,5-diisocyanato-2,2-dimethylpentane, 2,2,4- and/or 2,4,4-trimethyl-1,6-diisocyanatohexane, 1,10-diisocyanatodecane, 1,3- and/or 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane, 1-isocyanato-1-methyl-4(3)-isocyanatomethylcyclohexane, 2,4'- and/or 4,4'-diisocyanatodicyclohexylmethane, 1,3- and/or 1,4-bis(isocyanatomethyl)cyclohexane, bis(isocyanatomethyl)norbornane, 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- and/or 1,4-bis(isocyanatomethyl)benzene, 1,3- and/or 1,4-bis(1-isocyanato-1-methylethyl)benzene, bis(4-(1-isocyanato-1-methylethyl)phenyl) carbonate, 2,4- and/or 2,6-diisocyanatotoluene, 2,4'- and/or 4,4'-diisocyanatodiphenylmethane, 1,5-diisocyanatonaphthalene, and mixtures thereof.
In some embodiments, the molar ratio of NCO groups of the diisocyanate to the NCO-reactive groups of polymer P0 is from 1.1 to 3, preferably from 1.4 to 2.8, more preferably from 1.6 to 2.4, for instance from 1.8 to 2.2.
The present invention also relates to a polymer mixture produced by a process as defined herein. The present invention also relates to a composition comprising (for instance, consisting of) a polymer mixture as defined herein, and optionally one or more ingredients chosen from fillers, adhesion promoters, plasticizers, crosslinking catalysts, and drying agents.
Another object of the present invention is a sealant or adhesive formed from a composition as defined herein.

DETAILED DESCRIPTION

In step a), a polymer comprising NCO groups (i.e. isocyanate groups) is used. Such polymer is referred to as "polymer P1" in the present application.
Polymer P1 has an average NCO-functionality of at least two. As used herein, the "average NCO-functionality" is defined by the following equation (1):

$$\overline{f1} = \frac{\sum xi \times fi}{\sum xi} \quad (1),$$

in which, for each polymer chain i of polymer P1, *xi* is the number of moles of such polymer chain i and *fi* is the NCO-functionality of such polymer chain i. The NCO-functionality of such polymer chain i refers to the number of NCO groups of

such polymer chain i.

For instance, if 1 mole of polymer P1 consists of 0.75 mol ($x_A$) of polymer chains A having 2 NCO groups ($f_A$ = 2) and 0.25 mol ($x_B$) of polymer chains B having 3 NCO groups ($f_B$ = 3), then the average NCO-functionality is $\overline{f1}$ = (0.75 x 2 + 0.25 x 3)/(0.25+0.75) = 2.25.

Polymer P1 may in particular have an average NCO-functionality from 2 to 6, for instance from 2 to 5, preferably from 2 to 4, more preferably from 2 to 3.

Advantageously, polymer P1 has a number-average molecular weight of at least 1000 g/mol, preferably at least 2000 g/mol, more preferably at least 5000 g/mol, for instance at least 10 000 g/mol.

Advantageously, polymer P1 has a number-average molecular weight of at most 60 000 g/mol, preferably at most 50 000 g/mol, more preferably at most 40 000 g/mol, even more preferably at most 30 000 g/mol, for instance at most 20 000 g/mol.

The number-average molecular weight of a polymer can be determined by size exclusion chromatography ("SEC") or light scattering.

Polymer P1 may be a polymer chosen from a polyacrylate, a polycarbonate, a polyester (e.g. polycaprolactone), a polycarbonate polyester, a polyurethane, a polyether (e.g. polyethylene glycol, polypropylene glycol, polytetrahydrofuran), a polysiloxane, a polyisoprene, a polybutadiene, copolymers thereof and mixtures thereof, where said polymer further comprises NCO groups such that its average NCO-functionality is of at least two. Usually, NCO groups of a polymer P1 are linked to the remaining of the polymer through a hydrocarbon moiety comprising a -C(O)-NH- moiety.

When the expression "copolymers thereof" is used in a list of polymers, it is intended to include any copolymer, such as alternating, random, block or graft copolymer, of the polymers from such list. For instance, in the above list provided for polymer P1, a copolymer may be a poly(butadiene-co-isoprene).

In a preferred embodiment, polymer P1 is a polyether (such as a polyethylene glycol, polypropylene glycol, polytetrahydrofuran) further comprising NCO groups such that its average NCO-functionality is of at least two.

In some embodiments, polymer P1 may be a polymer of formula $A(B\text{-}C\text{-}D)_w$, or a mixture of polymers having such formula, wherein:

- A is a polymer chain chosen from a polyacrylate, a polycarbonate, a polyester (e.g. polycaprolactone), a polyurethane, a polysiloxane, a polyether (e.g. polyethylene glycol, polypropylene glycol, polytetrahydrofuran), a polyisoprene, a polybutadiene and copolymers thereof;
- B is a group of formula -C(O)-NH-;
- C is a divalent hydrocarbon moiety preferably having 2 to 18 carbon atoms,
- D is a -NCO group; and
- w is an integer from 2 to 6, for instance from 2 to 5, preferably from 2 to 4, more preferably w is 2 or 3.

C may in particular be an alkylene, an arylene or a combination thereof. As used herein, a combination of alkylene and arylene refers to one or more alkylene and one or more arylene linked to each other, such as -(alkylene)-(arylene)-(alkylene)-, -(alkylene)-(arylene)-, or -(arylene)-(alkylene)-(arylene)-. C may more particularly be a moiety chosen from 1,4-butanyl, 1,5-pentanyl, 1,6-hexanyl, (2-methyl)-1,5-pentanyl, (2,2-dimethyl)-1,5-pentanyl, (2,2,4-trimethyl)-1,6-hexanyl, (2,4,4-trimethyl)-1,6-hexanyl, 1,10-decanyl, 1,3-cyclohexanyl, 1,4-cyclohexanyl, (3,3,5-trimethyl)-1,4-cyclohexanyl, (2-methyl)-1,3-cyclohexanyl, (4-methyl)-1,3-cyclohexanyl, (3,3-dimethyl-5-methyl)-1-cyclohexanyl, (1-methyl-4-methyl)-1-cyclohexanyl, 2,4'-dicyclohexylmethanyl, 4,4'-dicyclohexylmethanyl, 1,3-bis(methyl)cyclohexanyl, 1,4-bis(methyl)cyclohexanyl, bis(methyl)norbornanyl, 3,3'-dimethyl-4,4'-dicyclohexylmethanyl, 3,3',5,5'-tetramethyl-4,4'-dicyclohexylmethanyl, 4,4'-[1,1'-bi(cyclohexyl)], (3,3'-dimethyl)-4,4'-[1,1'-bi(cyclohexyl)], 2,2',5,5'-tetramethyl-4,4'-[1,1'-bi(cyclohexyl)], 1,8-p-menthanyl, 1,3-diisocyanatoadamantane, 1,3-dimethyl-5,7-adamantanyl, 1,3-bis(methyl)benzene, 1,4-bis(methyl)benzene, 1,3-bis(*1*-methylethyl)benzene, 1,4-bis(1-methylethyl)benzene, bis(4-(1-methylethyl)phenyl) carbonate, 2,4-toluene, 2,6-toluene, 2,4'-diphenylmethanyl, 4,4'-diphenylmethanyl, 1,5-naphthalene.

In this above list, the numbers or groups in italic indicate the position by which the divalent group C is attached to the remaining of the polymer. For instance, if C is (3,3-dimethyl-5-methyl)-1-cyclohexanyl, then the divalent group C can be represented as follows, wherein the symbol • indicates the positions by which the divalent group C is attached to the remaining of the polymer.

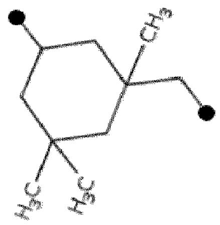

Polymer P1 can be produced by any suitable method known to the skilled artisan (for instance, methods as described in EP2948487 or US9102854). Preferably, polymer P1 is produced by a process comprising the following step: o) reacting a polymer comprising NCO-reactive groups with an average NCO-reactive-functionality of at least two with a diisocyanate.

The polymer comprising NCO-reactive groups used in step o) is referred to as "polymer P0" in the present application.

As used herein, the "NCO-reactive groups" refers to any chemical group which is able to react, typically through a condensation reaction, with an isocyanate (NCO) group. Such NCO-reactive group may in particular be a compound containing an active hydrogen. An active hydrogen refers to a hydrogen which, because of its position in the molecule, displays significant activity according to the Zerewitnoff test described by Wohler in the Journal of the American Chemical Society, Vol. 49, p. 3181 (1927).

Such NCO-reactive groups are well-known to the skilled artisan. For instance, such NCO-reactive groups may be a hydroxy group (-OH), a mercapto group (-SH), a primary amino group ($-NH_2$), a secondary amino group (-NH-), a carboxy (-COOH), or an amido (-C(O)-NH-, in particular $-C(O)NH_2$).

A preferred NCO-reactive group for polymer P0 is hydroxy group (-OH).

Polymer P0 may comprise NCO-reactive groups which are all identical to each other or may comprise different NCO-reactive groups.

Polymer P0 has an average NCO-reactive-functionality of at least two. As used herein, the "average NCO-reactive-functionality" is defined by the following equation (2):

$$\overline{f0} = \frac{\sum xj \times fj}{\sum xj} \quad (2),$$

in which, for each polymer chain *j* of polymer P0, *xj* is the number of moles of such polymer chain *j* and *fj* is the NCO-reactive-functionality of such polymer chain *j*. The NCO-reactive-functionality of such polymer chain *j* refers to the number of NCO-reactive groups of such polymer chain *j*.

Polymer P0 may in particular have an average NCO-reactive-functionality from 2 to 6, for instance from 2 to 5, preferably from 2 to 4, more preferably from 2 to 3.

Advantageously, polymer P0 has a number-average molecular weight of at least 1000 g/mol, preferably at least 2000 g/mol, more preferably at least 5000 g/mol, for instance at least 10 000 g/mol. Advantageously, polymer P0 has a number-average molecular weight of at most 60 000 g/mol, preferably at most 50 000 g/mol, more preferably at most 40 000 g/mol, even more preferably at most 30 000 g/mol, for instance at most 20 000 g/mol.

Polymer P0 may be a polymer chosen from a polyacrylate, a polycarbonate, a polyester (e.g. polycaprolactone), a polycarbonate polyester, a polyurethane, a polysiloxane, a polyether (e.g. polyethylene glycol, polypropylene glycol, polytetrahydrofuran), a polyisoprene, a polybutadiene, copolymers thereof and mixtures thereof, where said polymer comprises NCO-reactive groups such that its average NCO-reactive-functionality is of at least two.

More particularly, P0 may be chosen from hydroxyl-terminated polyethers (such as hydroxyl-terminated polyethylene glycol, hydroxyl-terminated polypropylene glycol, hydroxyl-terminated polytetrahydrofuran), hydroxyl-terminated polycarbonates, amine-terminated polyethers, amine-terminated polyesters, hydroxyl-terminated polyesters (such as hydroxyl-terminated polycaprolactone), hydroxyl-terminated polycarbonate polyesters, hydroxyl-terminated polyisoprenes, hydroxyl-terminated polybutadienes, copolymers thereof and mixtures thereof. In a preferred embodiment, P0 is a hydroxyl-terminated polyether (such as hydroxyl-terminated polyethylene glycol, hydroxyl-terminated polypropylene glycol, or hydroxyl-terminated polytetrahydrofuran), more preferably hydroxyl-terminated polypropylene glycol.

As used herein, "diisocyanate" refers to any organic compound comprising two NCO groups. Typically, said diisocyanate used in step o) is a monomeric compound, i.e. not a polymeric compound. The molecular weight of the diisocyanate may be from 100 to 500 g/mol, more particularly from 120 to 350 g/mol.

Advantageously, said diisocyanate is chosen from 1,4-diisocyanatobutane, 1,5-diisocyanatopentane, hexamethylene 1,6-diisocyanate, 2-methyl-1,5-diisocyanatopentane, 1,5-diisocyanato-2,2-dimethylpentane, 2,2,4- and/or 2,4,4-trimethyl-1,6-diisocyanatohexane, 1,10-diisocyanatodecane, 1,3- and/or 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane, 1-isocyanato-1-methyl-4-isocyanatomethylcyclohexane, 2,4'- and/or 4,4'-diisocyanatodicyclohexylmethane, 1,3- and/or 1,4-bis(isocyanatomethyl)cyclohexane, bis(isocyanatomethyl)norbornane, 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- or 1,4-bis(isocyanatomethyl)benzene, 1,3- or 1,4-bis(1-isocyanato-1-methylethyl)benzene, bis(4-(1-isocyanato-1-methylethyl)phenyl) carbonate, 2,4- and/or 2,6-diisocyanatotoluene, 2,4'- or 4,4'-diisocyanatodiphenylmethane, 1,5-diisocyanatonaphthalene, and mixtures thereof.

Preferably, said diisocyanate is chosen from 4,4'-diisocyanatodicyclohexylmethane, 1-isocyanato-3,3,5-trimethyl-5-isocyanatomethylcyclohexane, 2,4'- or 4,4'-diisocyanatodiphenylmethane, 2,4- and/or 2,6-diisocyanatotoluene.

The molar amount of NCO of the diisocyanate is advantageously higher than the molar amount of NCO-reactive groups of polymer P0. Preferably, the molar ratio of NCO groups of the diisocyanate to the NCO-reactive groups of polymer P0 is from 1.1 to 3, more preferably from 1.4 to 2.8, even more preferably from 1.6 to 2.4, for instance from 1.8 to 2.2.

The contacting in step o) is typically carried out at a temperature from 5 to 90°C, more particularly from 15°C to 80°C, for instance from 50 to 70 °C.

The contacting in step o) is typically carried out in the absence of solvent (e.g. in the absence of organic solvent and water).

The contacting in step o) is advantageously carried out under an inert atmosphere (e.g. $N_2$ or Ar atmosphere).

The contacting in step o) is advantageously carried out in the presence of a catalyst. Such catalyst is a catalyst of the reaction between the NCO groups of the diisocyanate and the NCO-reactive groups of polymer P0. Examples of such catalysts include, but are not limited to, tin-based catalyst (e.g. dibutyltin di-laureate), bismuth-based catalyst (e.g. bismuth carboxylates), zirconium-based catalyst, and titanium-based catalyst.

The contacting in step o) is typically carried out for a duration from 15 min to 24h, preferably from 30 min to 4h.

In step a) of the process of the invention, polymer P1 is contacted with a compound comprising exactly one NCO-reactive group.

Such compound comprising exactly one NCO-reactive group used in step a) is referred to as "compound C1" in the present application.

The NCO-reactive groups of compound C1 may be a hydroxy group (-OH), a mercapto group (-SH), a primary amino group ($-NH_2$), a secondary amino group (-NH-), a carboxy (-COOH), or an amido (-C(O)-NH-, in particular $-C(O)NH_2$).

A preferred NCO-reactive group for compound C1 is hydroxy group (-OH). In other words, a preferred compound C1 is a monool.

Compound C1 may be a monomeric compound or a polymer. C1 may be linear or branched. Advantageously, compound C1 has a molecular weight of at least 50 g/mol, preferably at least 90 g/mol, more preferably at least 200 g/mol, for instance at least 500 g/mol.

Advantageously, compound C1 has a molecular weight of at most 25000 g/mol, preferably at most 15 000 g/mol, more preferably at most 10 000 g/mol, even more preferably at most 4 000 g/mol, for instance at most 2 000 g/mol, more particularly at most 1000 g/mol.

When compound C1 is a polymer, then the molecular weight refers to the number-average molecular weight.

In some embodiments, compound C1 is a polymer chosen from a polyacrylate, a polycarbonate, a polyester (e.g. polycaprolactone), a polyurethane, a polyether (e.g. polyethylene glycol, polypropylene glycol, polytetrahydrofuran), a polyisoprene, a polybutadiene, copolymers thereof and mixtures thereof, where said polymer comprises exactly one NCO-reactive group.

In a more particular embodiment, compound C1 is a polymer chosen from a polyacrylate monool, a polycarbonate monool, a polyester (e.g. polycaprolactone) monool, a polyurethane monool, a polyether (e.g. polyethylene glycol, polypropylene glycol, polytetrahydrofuran) monool, a polyisoprene monool, a polybutadiene monool, copolymers thereof and mixtures thereof.

In some embodiments, compound C1 is a polyether comprising exactly one NCO-reactive group. In a preferred embodiment, compound C1 is a polyether comprising exactly one hydroxy group (namely a polyether monool). Polyether monools can be prepared by any suitable method known to the skilled artisan, such as methods described in US 5,158,922, EP 0,654,302 or EP 0,950,679.

The molar ratio of NCO-reactive groups of C1 to NCO groups of P1 is from 0.01 to 0.9. Such ratio allows that a part of the NCO groups of P1 remains present at the end of the reaction in step a), while the other part of the NCO groups of P1 is functionalized with compound C1 through reaction with the NCO-reactive group.

Preferably, the molar ratio of NCO-reactive groups of C1 to NCO groups of P1 is from 0.05 to 0.8, more preferably from 0.07 to 0.7, even more preferably from 0.1 to 0.5, even more preferably from 0.15 to 0.4.

The contacting in step a) is typically carried out at a temperature from 5 to 90°C, more particularly from 15°C to 80°C, for instance from 30 to 70 °C.

The contacting in step a) is typically carried out in the absence of solvent (e.g. in the absence of organic solvent and water). When compound C1 has a high molecular weight, typically above 2000 g/mol, or even above 4000 g/mol, it may be advantageous to carry out step a) in the presence of a plasticizer, which may help decreasing the viscosity of the mixture of step a). Examples of plasticizers include those mentioned below.

The contacting in step a) is advantageously carried out under an inert atmosphere (e.g. $N_2$ or Ar atmosphere).

The contacting in step a) is advantageously carried out in the presence of a catalyst. Such catalyst is a catalyst of the reaction between the NCO groups of the diisocyanate and the NCO-reactive groups of polymer P0, such as those mentioned above.

The contacting in step a) is typically carried out for a duration from 15 min to 24h, preferably from 30 min to 4h.

The mixture produced in step a) is referred to as "mixture M1" in the present application.

In step b), said mixture M1 is contacted with a silane comprising at least one (for instance, one or two) NCO-reactive group. Preferably, said silane comprises exactly one NCO-reactive group.

Such silane may be any suitable silane comprising a silane moiety able to cure when in contact with moisture. Such silane comprises a moisture-curable silane moiety and at least one NCO-reactive group. Usually, such silane comprises:

- at least one (e.g. one, two or three) silicon atom,
- at least two (e.g. two or three) Si-O bond, formed between a silicon atom and an oxygen-containing hydrocarbon group,
- at least one Si-C bond with a hydrocarbon group comprising at least one NCO-reactive group, and
- optionally at least one Si-C bond with a hydrocarbon group deprived of NCO-reactive group. Examples of oxygen-containing hydrocarbon group include, but are not limited to, alcoxy, acetoxy, or oxime group.

Said silane may thus be chosen from an alcoxy-silane comprising at least one NCO-reactive group, an acetoxy-silane comprising at least one NCO-reactive group, and an oximino-silane comprising at least one NCO-reactive group, and mixtures thereof.

The NCO-reactive group(s) of the silane may be a hydroxy group (-OH), a mercapto group (-SH), a primary amino group (-NH2), a secondary amino group (-NH-), a carboxy (-COOH), or an amido (-C(O)-NH-, in particular $-C(O)NH_2$). Preferably, the NCO-reactive group(s) of the silane is(are) chosen from a primary amino group and secondary amino group. More preferably, the NCO-reactive group(s) of the silane is(are) a secondary amino group.

Examples of silanes comprising at least one NCO-reactive group(s) of the silane chosen from primary amino group and secondary amino group include, but are not limited to, (N-(2-aminoethyl)-3-aminopropylmethyldimethoxysilane), bis[3-(trimethoxysilyl)propyl]amine, 3-aminopropyltrimethoxysilane, 3-aminopropyldimethoxymethylsilane; N-methyl-3-aminopropyltrimethoxysilane, N-butyl-3-aminopropyltrimethoxysilane, N-phenyl-3-aminopropyltrimethoxysilane; products of the Michael addition of alcoxysilanes comprising a primary amino group (such as 3-aminopropyltrimethoxysilane or 3-aminopropyldimethoxymethylsilane) onto Michael acceptors (such as acrylonitrile, (meth)acrylic esters, (meth)acrylamides, maleic and fumaric diesters, citraconic diesters and itaconic diesters), for example dimethyl and diethyl N-(3-trimethoxysilylpropyl)aminosuccinate. Other examples also include analogs of such listed silanes wherein methoxy groups are replaced with ethoxy or isopropoxy groups.

In one embodiment, said silane comprising at least one NCO-reactive group is of formula (I):

$$R^1\text{-}Si(OR^2)_x(R^3)_{3-x} \qquad (I),$$

in which:

- x is 2 or 3 (preferably 3),
- $R^1$ is a C1-C20 hydrocarbon group comprising at least one (e.g. one or two) NCO-reactive group, said hydrocarbon group being optionally substituted by at least one (e.g. one or two) group of formula $-Si(OR^2)_x(R^3)_{3-x}$ (x, $R^2$, $R^3$ having the same meaning as defined for formula (I)),
- $R^2$ is a C1-C20 aliphatic group, a C3-C20 alicyclic group, a C6-C20 aromatic group, a C2-C20 acyl group, or a C2-C20 iminyl group, and
- $R^3$ is a C1-C20 aliphatic group, a C3-C20 alicyclic group, a C6-C20 aromatic group,

wherein said NCO-reactive group of the silane is preferably chosen from a hydroxy group (-OH), a mercapto group (-SH), a primary amino group ($-NH_2$), a secondary amino group (-NH-), a carboxy (-COOH), and an amido (-C(O)-NH-, in particular $-C(O)NH_2$), more preferably from a primary amino group (-NH2) and a secondary amino group (-NH-).

$R^1$ may in particular be a C1-C20 aliphatic (e.g. C1-C20 alkyl or C2-C20 alkenyl), C3-C20 alicylic (e.g. C3-C20 cycloalkyl or C3-C20 cycloalkenyl), or C6-C20 aromatic group, comprising at least one (preferably, exactly one) NCO-reactive group.

Preferably, $R^1$ is a C1-C20 aliphatic (e.g. C1-C20 alkyl or C2-C20 alkenyl) or C3-C20 alicylic (e.g. C3-C20 cycloalkyl, C3-C20 cycloalkenyl) group comprising at least one (preferably exactly one) NCO-reactive group.

More preferably, $R^1$ is a C1-C12 aliphatic (e.g. C1-C12 alkyl or C2-C12 alkenyl, preferably C1-C12 alkyl) group comprising at least one (preferably exactly one) NCO-reactive group.

Even more preferably, $R^1$ is a C1-C6 alkyl comprising at least one (preferably exactly one) NCO-reactive group.

In a particular embodiment, $R^1$ is of formula $-(CH_2)_n-X$ wherein n is an integer from 1 to 8 (preferably from 1 to 5) and X is -OH, -SH, or $-NHR^4$ with $R^4$ being H, a C1-C12 alkyl, aryl (e.g. phenyl), $-CH_2CH_2CN$, $-CH_2CH_2COOR^5$, or $-CH(COOR^6)CH_2-COOR^7$ with each of $R^5$, $R^6$, and $R^7$ being C1-C6 alkyl.

$R^2$ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aromatic, C2-C12 acyl, or C2-C12 iminyl group. Preferably, $R^2$ is a C1-C12 aliphatic (e.g. C1-C12 alkyl or C2-C12 alkenyl, preferably C1-C12 alkyl) group. More preferably, $R^2$ is a C1-C6 alkyl (for instance a methyl, ethyl, propyl, or isopropyl).

$R^3$ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aromatic group.

Preferably, $R^3$ is a C1-C12 aliphatic (e.g. C1-C12 alkyl or C2-C12 alkenyl, preferably C1-C12 alkyl) group. More preferably, $R^3$ is a C1-C6 alkyl (for instance a methyl, ethyl, propyl, or isopropyl).

The term "aliphatic group" refers to a saturated or unsaturated, linear or branched, acyclic hydrocarbon group.

The term "alicyclic group" refers to a saturated or unsaturated (non-aromatic), linear or branched, mono- or polycyclic hydrocarbon group.

The term "alkyl group" refers to a linear or branched, acyclic saturated hydrocarbon group.

The term "alkenyl group" refers to a linear or branched, acyclic unsaturated hydrocarbon group, comprising at least one carbon-carbon double bond.

The term "cycloalkyl group" refers to a linear or branched, mono- or poly-cyclic saturated hydrocarbon group.

The term "cycloalkenyl group" refers to a linear or branched, mono- or poly-cyclic unsaturated (non-aromatic) hydrocarbon group, comprising at least one carbon-carbon double bond.

The term "acyl" refers to a group of formula -C(O)-(aliphatic) where "aliphatic" is as defined herein. The carbon of the C=O moiety is included in the number of carbon atoms of the acyl group.

The term "iminyl" refers to a group of formula -N=C(aliphatic)(aliphatic) where each "aliphatic" is as defined herein. The carbon of the -N=C- moiety is included in the number of carbon atoms of the iminyl group.

The term "alkylene" refers to a divalent saturated, linear or branched, acyclic hydrocarbon group. The term "arylene" refers to a divalent aromatic hydrocarbon group.

The molar ratio of NCO-reactive groups of the silane to NCO groups remaining in mixture M1 is advantageously higher than or equal to 1, for instance from 1 to 5, preferably from 1 to 3, more preferably from 1 to 2, even more preferably from 1 to 1.5.

The molar amount of NCO groups remaining in the mixture M1 obtained in step a) can be determined by titration according to standard NF EN ISO 14896 2009-05 - Plastics - Polyurethane raw materials - Determination of isocyanate content.

The contacting in step b) is typically carried out at a temperature from 5 to 90°C, more particularly from 15°C to 70°C, for instance from 30 to 60 °C.

The contacting in step b) is typically carried out in the absence of solvent (e.g. in the absence of organic solvent and water).

The contacting in step b) is advantageously carried out under an inert atmosphere (e.g. $N_2$ or Ar atmosphere).

The contacting in step b) is typically carried out for a duration from 15 min to 24h, preferably from 30 min to 4h.

The present invention also relates to a polymer mixture produced by a process as defined herein.

The present invention also relates to a composition comprising (for instance, consisting of) a polymer mixture as defined herein. Such composition may be referred to as a moisture-curable composition.

The weight content of the polymer mixture according to the invention (in dry extract) in the composition is generally from 5 to 99.9%, for instance from 5 to 95%, or from 10 to 90%, or from 15 to 80%, relative to the total dry weight of the composition.

Such composition may further comprise one or more of the following ingredients: fillers, adhesion promoters, plasticizers, crosslinking catalysts, drying agents, stabilizers (for example against heat, light or UV radiation), rheology modifiers (such as thickeners or thixotropic agents), flame-retardant, surface-active substances (such as wetting agents, leveling agents, deaerating agents or defoamers), and biocides (such as algicides or fungicides).

More particularly, such composition may comprise one or more of the following ingredients: fillers, adhesion promoters, plasticizers, crosslinking catalysts, and drying agents.

Fillers may in particular be organic or mineral fillers. Examples of fillers include, but are not limited to, expanded glass, talc, dolomite, mica, ground basalt, organic or mineral pigments, kaolin (e.g. calcined kaolin), aluminum powder, chalk, powdered lime, precipitated and/or fumed silica, zeolites, bentonites, magnesium carbonate, calcium carbonate, calcium sulfate, barium sulfate, kieselguhr, alumina, clay, talc, titanium oxide, iron oxide, zinc oxide, sand, quartz, flint, mica, glass powder, carbon black, graphite, wood fibers, wood flour, wood shavings, cellulose, cotton, dried pulp, wood chips, chopped straw, chaff, ground walnut shells, glass fiber, glass filament, polyacrylonitrile, carbon fiber, Kevlar fiber, or polyethylene fibers.

The weight content of fillers (in dry extract) in the composition is generally from 0 to 90%, for instance from 20 to 80%, or from 30 to 70%, relative to the total dry weight of the composition.

An adhesion promoter refers to a substance that improves the adhesion properties of adhesive layers on a surface. Examples of adhesions promoters include, but are not limited to, rosins, resins, terpene oligomers, coumarone/indene resins, aliphatic, petrochemical resins and modified phenol resins. More particularly, the adhesion promoter may be chosen from hydrocarbon resins (which are typically obtained by polymerization of terpenes, primarily $\alpha$- or $\beta$-pinene, dipentene or limonene, optionally in combination with other monomers, for example styrene, $\alpha$-methylstyrene, or isoprene), and terpenephenol resins (typically produced by acid-catalyzed addition of phenols onto terpenes or rosin).

The adhesion promoter may alternatively be a silane (in particular an amino-, mercapto-, or epoxysilane), an organotitanate, or an organozirconate.

The adhesion promoter may in particular be a compound of formula $(R^8)_3Si\text{-}R^9\text{-}N(R^{10})_2$, where

- each $R^8$ is independently selected from C1-C8 alkyl, -O-(C1-C8 alkyl) or -O-(C1-C8 acyl), at least one radical $R^8$ being a -O-(C1-C8 alkyl) or -O-(C1-C8 acyl),
- $R^9$ is a divalent hydrocarbon radical having 1 to 12 carbon atoms and optionally containing one or more heteroatoms, and
- each $R^{10}$ is independently selected from H and C1-C8 alkyl.

The weight content of adhesion promoters (in dry extract) in the composition is generally from 0 to 5%, for instance from 0.2 to 3%, or from 0.5 to 2%, relative to the total dry weight of the composition.

A crosslinking catalyst (or equivalently "curing catalyst") refers to a substance which facilitates the reaction of the silane-terminated polymers with water, and thus the subsequent crosslinking of the silanes. Examples of crosslinking catalysts include Lewis and/or Bronsted acids and bases. The crosslinking catalyst may in particular be a metal catalyst or a nitrogen-containing catalyst.

Suitable metal catalysts are in particular organotin compounds, organotitanates, organozirconates and organoaluminates. The organotitanates, organozirconates and organoaluminates preferably have ligands which are selected from an alkoxy group, sulfonate group, carboxylate group, dialkylphosphate group, dialkylpyrophosphate group and acetylacetonate group, where all ligands may be identical or different from each other.

Examples of organotitanates include, but are not limited to, bis(ethylacetoacetato)diisobutoxytitanium(IV), bis(ethylacetoacetato)diisopropoxytitanium(IV), bis(acetylacetonato)diisopropoxytitanium(IV), bis(acetylacetonato)diisobutoxytitanium(IV), tris(oxyethyl)amineisopropoxytitanium(IV), bis[tris(oxyethyl)amine]diisopropoxytitanium(IV), bis(2-ethylhexane-1,3-dioxy)titanium(IV), bis(neopentyl(diallyl)oxydiethoxytitanium(IV), tris[2-((2-aminoethyl)amino) ethoxy]ethoxytitanium(IV), titanium(IV) tetrabutoxide, tetra(2-ethylhexyloxy) titanate, tetra(isopropoxy) titanate and polybutyl titanate.

Suitable nitrogen-containing compounds are for example amidines; amines such as in particular N-ethyldiisopropylamine, N,N,N',N'-tetramethylalkylenediamines, polyoxyalkyleneamines, 1,4-diazabicyclo[2.2.2]octane; aminosilanes such as 3-aminopropyltrimethoxysilane, 3-aminopropyldimethoxymethylsilane, N-(2-aminoethyl)-3-aminopropyltrimethoxysilane, N-(2-aminoethyl)-3-aminopropylmethyldimethoxysilane, N-(2-aminoethyl)-N'-[3-(trimethoxysilyl)propyl]ethylenediamine and analogs thereof having ethoxy or isopropoxy groups instead of methoxy groups on the silicon.

Examples of amidines include, but are not limited to, 1,8-diazabicyclo[5.4.0]undec-7-ene (DBU), 1,5-diazabicyclo[4.3.0]non-5-ene (DBN), 6-dibutylamino-1,8-diazabicyclo[5.4.0]undec-7-ene; methyl-triazabicyclodecene, guanidines such as tetramethylguanidine, 2-guanidinobenzimidazole, acetylacetoneguanidine, 1,3-di-o-tolylguanidine, 1,3-diphenylguanidine, tolylbiguanidine, 2-tert-butyl-1,1,3,3-tetramethylguanidine; and imidazoles such as N-(3-trimethoxysilylpropyl)-4,5-dihydroimidazole and N-(3-triethoxysilylpropyl)-4,5-dihydroimidazole.

The weight content of crosslinking catalysts (in dry extract) in the composition is generally from 0.001% to 5%, preferably from 0.005% to 1%, particularly preferably from 0.01% to 0.5%, relative to the total dry weight of the composition.

Examples of plasticizers include, but are not limited to:

- esters of organic carboxylic acids or their anhydrides, such as fatty acid alkyl esters, phthalates (e.g. dioctyl phthalate,

diisononyl phthalate or diisodecyl phthalate), adipates (e.g. dioctyl adipate), azelates and sebacates,

- polyols, e.g. polyoxyalkylene polyols (e.g. polypropylene glycol) or polyester polyols,
- organic phosphoric and sulfonic esters (e.g. alkylsulfonic esters of phenol),
- mineral oils,
- polybutenes, or
- plasticizers based on renewable raw materials (which may likewise be fatty acid alkyl esters or combinations thereof, for instance vegetable oils, such as rapeseed oil, soybean oil and palm oil, and esters, especially methyl esters, of vegetable oils, such as rapeseed oil methyl ester, soya methyl ester and palm oil methyl ester).

The weight content of plasticizers (in dry extract) in the composition is generally from 0 to 40%, preferably from 2 to 30%, or even from 5 to 25%, relative to the total dry weight of the composition.

Examples of drying agents used include monomeric alkylsilanes and monomeric vinyl group-containing silanes, such as vinyltrimethoxysilane or vinyltriethoxysilane.

The weight content of drying agents (in dry extract) in the composition is generally from 0.1 to 10%, preferably from 0.2 to 5%, or even from 0.5 to 3%, relative to the total dry weight of the composition.

Advantageously, the composition of the invention comprises less than 2 wt%, preferably less than 1 wt%, more preferably less than 0.5 wt%, or even less than 0.2 wt% of water, relative to the total weight of the composition.

The composition is typically a mono-component composition. When the composition comprises the polymer mixture and further ingredients (e.g. chosen from those described above), such composition can be formed by adding such ingredients to the polymer mixture. In some embodiments, a composition comprising the polymer mixture and optionally further ingredients (e.g. chosen from those described above) is prepared by a process comprising:

1) preparing the polymer mixture by a process as defined herein, and
2) optionally adding further ingredients (e.g. chosen from those described above).

The composition of the invention is particularly suitable for forming a sealant or an adhesive, typically by moisture-curing such composition.

An object of the present invention is a sealant or adhesive formed from a composition as defined herein.

The sealant or adhesive of the invention is formed from a composition as defined herein, and more particularly by moisture-curing such composition (or even more particularly by applying and moisture-curing such composition).

The moisture-curing is typically a curing by the moisture from the ambient air. The moisture-curing typically occurs at room temperature, without external heating.

The present invention is illustrated by the following non-limiting examples.

EXAMPLES

1 - Adhesion test: Peeling joints were made by spreading a mixture of polymer with 0.5%wt of DBTDL over a glass substrate and covering the adhesive with a flexible aluminum backing. A spacer with a gap of 1 mm was positioned over the substrate to control the adhesive thickness. The resulting specimen was kept at 40°C and 60% Relative Humidity for 7 days, so that the crosslinking can take place. In order to assure the same surface reactivity, the glass slides were cleaned with a boiling "piranha" solution (3 parts of concentrated sulfuric acid mixed with 1 part of hydrogen peroxide 33%v) and stocked. Just before specimen preparation, the slides are activated in an ultraviolet-ozone chamber for 15 minutes. The flexible backing is a strip of 1050 anodized aluminum 0.1 mm thick and 15 mm wide, previously sanded and treated with tetraethoxysilane solution, as described by Fourton (Dynamic Adhesion Breaking in Laminated Glass-Effect of Interfaces and Polymer's Rheology. Ph.D. Dissertation, Université Paris Sciences et Lettres, 2019) and Elzière (Laminated Glass: Dynamic Rupture of Adhesion. Ph.D. Dissertation, Université Pierre & Marie Curie-Paris 6, 2016).

The adherence properties of the samples were characterized with the instrumented peeling test described in Villey et al.'s work (Int J Fract 2017, 204 (2), 175-190). 90° peeling tests were conducted with the Instron™ Universal Testing Machine (model 3343) and pull speed of 1 mm/s.

2 - Synthesis of silane-terminated Polymer mixtures:

o) The first step consists in the reaction of a previously dewatered hydroxyl-terminated linear polypropylene glycol (Acclaim 12200 N® - polymer "P0") with 4,4'-diisocyanato dicyclohexylmethane (H12MDI). The isocyanate-hydroxyl molar ratio was 2 (NCO/OH = 2). After 2h, the product of this reaction, namely the isocyanate-terminated urethane prepolymer (polymer "P1"), was obtained. The reaction took place at 65°C in the presence of 125 ppm DBTDL catalyst, under $N_2$ atmosphere and with mechanical stirring.

a) To the mixture obtained in step o), a monool (pre-dried with molecular sieves) was added and the resulting mixture was stirred at 65°C for 1 hour, under $N_2$ atmosphere and with mechanical stirring.

b) To the mixture obtained in step a), an amino-alcoxysilane was added and the resulting mixture was stirred at 40°C for 1 hour, under $N_2$ atmosphere and with mechanical stirring, so as to obtain a polymer mixture.

Synthesis steps could be confirmed by analyzing the infrared spectra of the polyol ("P0"), the polymer of step a) ("P1") and the final polymer mixture at the 1500-2300 $cm^{-1}$ zone. First step was confirmed with the appearance of the urethane C=O stretch peak at 1720 $cm^{-1}$ in the spectrum of polymer "P1". The new isocyanate peak at 2260 cm-1 indicated the presence of non-reacted isocyanate groups at the chain ends of polymer "P1" due to stoichiometric excess. Both peaks were not present in the polyol precursor ("P0") spectrum.

After silane endcapping, the isocyanate peak was absent and a peak appears in the final silane-terminated polymer spectrum at 1650 cm-1, corresponding to the C=O urea stretch. The urea absorption confirmed the reaction of the amine from the silane with the remaining isocyanate. The peak at 1510 cm-1 (C-N bond) increased after each step, with the higher amount of these bonds in the material.

Three polymer mixtures according to the invention - n° II, III, IV, V, VI - and a comparative polymer mixture - n° I - (no monool added) were prepared. Amounts of each ingredient used for such polymer mixtures are detailed in Table 1 below.

Table 1

| | | I * | II | III | IV | V | VI |
|---|---|---|---|---|---|---|---|
| Polyol | Hydroxyl-terminated linear polypropylene glycol (Acclaim 12200 N®) (g)[a] | 150 | 150 | 150 | 150 | 150 | 150 |
| Diisocyanate | 4,4'-diisocyanato dicyclohexylmethane (g) | 7.4 | 7.4 | 7.4 | 7.6 | 7.6 | 7.6 |
| Catalyst | Dibutyltin dilaureate DBTDL (mg) | 18 | 22 | 21 | 22 | 20 | 20 |
| Monool | Tri-propyleneglycol mono-methyl ether (g) | 0.0 | 0.6 | 0.9 | 1.4 | 0.0 | 0.0 |
| Monool | Polypropylene glycol mono-butyl ether (g)[b] | 0.0 | 0.0 | 0.0 | 0.0 | 3.6 | 7.5 |
| Endcapping silane | N-Methylaminopropyltrimethoxysilane (g) | 5.6 | 5.0 | 4.7 | 4.2 | 4.7 | 5.0 |
| | Normalised polyol molar fraction ("P0") | 1 | 1 | 1 | 1 | 1 | 1 |
| | Normalised di-isocyanate molar fraction | 2.0 | 2.0 | 2.0 | 2.0 | 2.0 | 2.0 |
| | Molar ratio $NCO_{diisocyanate}$ / $OH_{polyol\ P0}$ | 2.0 | 2.0 | 2.0 | 2.0 | 2.0 | 2.0 |
| | Normalised monool molar fraction | 0.0 | 0.2 | 0.3 | 0.5 | 0.1 | 0.2 |
| | Molar ratio $OH_{monool}$ / $NCO_{polyol\ P1}$ | 0.0 | 0.1 | 0.15 | 0.25 | 0.05 | 0.1 |
| | Normalised silane molar fraction | 2.0 | 1.8 | 1.7 | 1.5 | 1.7 | 1.8 |
| | **Average peel force per width (N/m)** | **160** | **570** | **680** | **2730** | **300** | **590** |

*Comparative test
[a]Mn = 10622 g/mol, measured by SEC
[b]Mn = 2500 g/mol

Results of Table 1 demonstrate that the partial functionalization of the NCO groups of the isocyanate-terminated urethane polymer ("P1") with a monool, before adding the silane, allow to form a polymer mixture having improved adhesion properties.

## Claims

1. A process for producing a polymer mixture, said process comprising:

   a) contacting a polymer P1 comprising NCO groups with an average NCO-functionality of at least two with a compound C1 comprising exactly one NCO-reactive group, with a molar ratio of NCO-reactive groups of C1 to NCO groups of P1 being from 0.01 to 0.9, so as to obtain a mixture M1; and
   b) contacting said mixture M1 with a silane comprising at least one NCO-reactive group.

2. The process of claim 1, wherein polymer P1 has a number-average molecular weight of:

   - at least 1000 g/mol, preferably at least 2000 g/mol; and
   - at most 60 000 g/mol, preferably at most 30 000 g/mol.

3. The process of claim 1 or 2, wherein polymer P1 is a polymer chosen from a polyacrylate, a polycarbonate, a polyester, a polyurethane, a polysiloxane, a polyether, a polyisoprene, a polybutadiene, copolymers thereof and mixtures thereof, where said polymer further comprises NCO groups such that its average NCO-functionality is of at least two.

4. The process of any one of claims 1 to 3, wherein polymer P1 has an average NCO-functionality from two to four.

5. The process of any one of claims 1 to 4, wherein compound C1 has a molecular weight from 50 to 25000 g/mol, preferably from 50 to 15000 g/mol, more preferably from 50 to 4000 g/mol, even more preferably 90 to 2000 g/mol.

6. The process of any one of claims 1 to 5, wherein said NCO-reactive group of compound C1 is a hydroxy group, a mercapto group, a primary amino group, a secondary amino group, a carboxy, or an amido, preferably a hydroxy group.

7. The process of any one of claims 1 to 6, wherein said molar ratio of NCO-reactive groups of C1 to NCO groups of P1 is from 0.05 to 0.8, preferably from 0.07 to 0.7, more preferably from 0.1 to 0.5, even more preferably from 0.15 to 0.4..

8. The process of any one of claims 1 to 7, wherein said silane comprising at least one NCO-reactive group is of formula (I):

   $$R^1\text{-}Si(OR^2)_x(R^3)_{3-x} \qquad (I),$$

   in which:

   - x is 2 or 3,
   - $R^1$ is a C1-C20 hydrocarbon group comprising at least one NCO-reactive group, said hydrocarbon group being optionally substituted by at least one group of formula $-Si(OR^2)_x(R^3)_{3-x}$,
   - $R^2$ is a C1-C20 aliphatic group, a C3-C20 alicyclic group, a C6-C20 aromatic group, a C2-C20 acyl group, or a C2-C20 iminyl group, and
   - $R^3$ is a C1-C20 aliphatic group, a C3-C20 alicyclic group, a C6-C20 aromatic group.

9. The process of any one of claims 1 to 8, wherein said NCO-reactive group of the silane is a hydroxy group, a mercapto group, a primary amino group, a secondary amino group, a carboxy, or an amido, preferably a primary or secondary amino group.

10. The process of any one of claims 1 to 9, wherein polymer P1 is produced by:

    o) reacting a polymer P0 comprising NCO-reactive groups with an average NCO-reactive-functionality of at least two with a diisocyanate,
    wherein polymer P0 preferably has an average NCO-reactive-functionality from two to four.

11. The process of claim 10, wherein polymer P0 has a number-average molecular weight of:

    - at least 1000 g/mol, preferably at least 2000 g/mol; and
    - at most 60 000 g/mol, preferably at most 30 000 g/mol.

**12.** The process of claim 10 or 11, wherein polymer P0 is chosen from hydroxyl-terminated polyethers, hydroxyl-terminated polycarbonates, amine-terminated polyethers, amine-terminated polyesters, hydroxyl-terminated polyesters, hydroxyl-terminated polyisoprene, hydroxyl-terminated polybutadiene, copolymers thereof and mixtures thereof.

**13.** The process of any one of claims 10 to 12, wherein the molar ratio of NCO groups of the diisocyanate to the NCO-reactive groups of polymer P0 is from 1.1 to 3, preferably from 1.4 to 2.8, more preferably from 1.6 to 2.4, for instance from 1.8 to 2.2.

**14.** A polymer mixture produced by a process as defined in any one of claims 1 to 13.

**15.** A composition comprising a polymer mixture as defined in claim 14, and optionally one or more ingredients chosen from fillers, adhesion promoters, plasticizers, crosslinking catalysts, and drying agents.

**16.** A sealant or adhesive formed from a composition as defined in claim 15.

Europäisches Patentamt
European Patent Office
Office européen des brevets

# EUROPEAN SEARCH REPORT

Application Number
EP 24 18 7476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/042609 A1 (BAYER MATERIALSCIENCE LLC [US]; BAYER AG [DE] ET AL.) 12 May 2005 (2005-05-12) * examples 1-4, 7-10 * * page 7, line 22 - page 8, line 2 * ----- | 1-16 | INV. C08G18/10 C08G18/12 C08G18/24 C08G18/28 C08G18/48 C08G18/75 C09D175/08 C09J175/08 |
| X | EP 2 548 903 A1 (SUNSTAR ENGINEERING INC [JP]) 23 January 2013 (2013-01-23) * paragraph [0007]; examples 1, 2 * ----- | 1-16 | |
| | | | TECHNICAL FIELDS SEARCHED (IPC) |
| | | | C08G C09D C09J |

The present search report has been drawn up for all claims

| Place of search | Date of completion of the search | Examiner |
|---|---|---|
| Munich | 25 November 2024 | Sütterlin, Martin |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 18 7476

This annex lists the patent family members relating to the patent documents cited in the above-mentioned European search report. The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| WO 2005042609 A1 | 12-05-2005 | AU 2004285912 A1 | 12-05-2005 |
| | | BR PI0415257 A | 26-12-2006 |
| | | CA 2542949 A1 | 12-05-2005 |
| | | CN 1871269 A | 29-11-2006 |
| | | EP 1678229 A1 | 12-07-2006 |
| | | JP 2007526356 A | 13-09-2007 |
| | | KR 20060090712 A | 14-08-2006 |
| | | MX PA06004395 A | 14-06-2006 |
| | | TW 200514799 A | 01-05-2005 |
| | | US 2004127670 A1 | 01-07-2004 |
| | | WO 2005042609 A1 | 12-05-2005 |
| EP 2548903 A1 | 23-01-2013 | CN 102791759 A | 21-11-2012 |
| | | EP 2548903 A1 | 23-01-2013 |
| | | JP 5769929 B2 | 26-08-2015 |
| | | JP 2011195617 A | 06-10-2011 |
| | | MY 159843 A | 15-02-2017 |
| | | SG 183926 A1 | 30-10-2012 |
| | | TW 201139481 A | 16-11-2011 |
| | | US 2013035453 A1 | 07-02-2013 |
| | | WO 2011114911 A1 | 22-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- EP 2952533 A
- EP 2948487 A
- US 9102854 B
- US 5158922 A
- EP 0654302 A
- EP 0950679 A

### Non-patent literature cited in the description

- **WOHLER**. *Journal of the American Chemical Society*, 1927, vol. 49, 3181
- **VILLEY et al.** *Int J Fract*, 2017, vol. 204 (2), 175-190